Europäisches Patentamt

European Patent Office

Office européen des brevets

(19)

(11) Numéro de publication : **0 406 101 B1**

(12) **FASCICULE DE BREVET EUROPEEN**

(45) Date de publication du fascicule du brevet :
**12.08.92 Bulletin 92/33**

(51) Int. Cl.⁵ : **A23C 15/06,** A23C 15/14,
A23C 7/04

(21) Numéro de dépôt : **90401830.6**

(22) Date de dépôt : **26.06.90**

(54) **Procédé de fabrication de produits laitiers à teneur réduite en stérols, et produits ainsi obtenus.**

(30) Priorité : **29.06.89 FR 8908730**

(43) Date de publication de la demande :
**02.01.91 Bulletin 91/01**

(45) Mention de la délivrance du brevet :
**12.08.92 Bulletin 92/33**

(84) Etats contractants désignés :
**AT BE CH DE DK ES FR GB GR IT LI LU NL SE**

(56) Documents cités :
**EP-A- 0 256 911
DE-A- 2 652 558
US-A- 3 491 132
PATENT ABSTRACTS OF JAPAN, vol. 6, no.
114 (C-110)[992], 25 juin 1982**

(73) Titulaire : **Roquette Frères
F-62136 Lestrem (FR)**

(72) Inventeur : **Graille, Jean
7, La Capelette
F-34750 Villeneuve les Maguelonne (FR)**
Inventeur : **Pioch, Daniel
1170 Chemin de Nouau
F-34730 Prades le Lez (FR)**
Inventeur : **Serpelloni, Michel
155, Route Nationale
F-62660 Beuvry-les-Bethune (FR)**
Inventeur : **Mentink, Léon
96, rue du Collège
F-59940 Estaires (FR)**

(74) Mandataire : **Boulinguiez, Didier et al
Cabinet Plasseraud, 84, rue d'Amsterdam
F-75009 Paris (FR)**

## Description

La présente invention est relative à un procédé de fabrication de produits laitiers à teneur réduite en stérols.

Parmi ces produits, on s'attachera dans ce qui suit plus particulièrement au cas du beurre sans que cela ne puisse constituer une limitation à la présente invention.

Il est connu que les stérols et plus spécifiquement le cholestérol sont des composés présents dans les matières grasses d'origine animale entrant dans la composition de bon nombre d'aliments dont le beurre fait partie intégrante.

Or, il a été établi depuis fort longtemps que des taux sanguins élevés de cholestérol (cholestérol LDL) sont en corrélation directe avec des maladies cardio-vasculaires graves.

La principale d'entre elles est l'athérosclérose qui se traduit par l'altération de la paroi des artères et dont l'une des causes est le dépôt localisé, excessif et anormal de cholestérol sur la face interne de la paroi d'une artère. L'athérome ainsi formé peut avoir des conséquences tragiques comme l'infarctus du myocarde. A titre illustratif, on peut indiquer qu'une diminution de 1% du cholestérol sanguin total entraîne une diminution de 2% du risque coronarien. L'excès de cholestérol peut également être à l'origine de calculs biliaires.

La prévention demeure l'un des moyens les plus efficaces pour remédier à ces pathologies. Elle peut consister à diminuer autant que possible l'ingestion d'aliments riches en cholestérol ou bien encore à consommer des denrées à teneur réduite en cholestérol.

Le souci des industriels de l'alimentaire est donc d'éliminer le cholestérol des produits tels que les graisses animales.

Ainsi, il a déjà été proposé diverses méthodes d'extraction des stérols des graisses.

L'une d'elles consiste à mettre en contact la matière grasse d'origine animale avec de la digitonine qui a la propriété de réagir avec le cholestérol pour donner un précipité. Les performances et les résultats de cette méthode ne sont pas satisfaisants du fait de la difficulté de séparation du précipité du milieu. Cette méthode est, en tout état de cause, inapplicable industriellement, notamment pour des produits alimentaires.

Le cholestérol peut également être extrait des matières grasses par entraînement à l'aide d'un solvant. L'inconvénient majeur de ce procédé est que les solvants généralement employés sont toxiques et qu'il en reste toujours des traces dans les matières grasses considérées.

On connaît également des procédés de microdistillation, inapplicables au niveau industriel, ou bien encore d'adsorption sur colonnes comme il est décrit par exemple dans les demandes de brevet européen EP N° 0174848 et EP N° 0318326. Ces demandes enseignent un procédé suivant lequel la matière grasse maintenue à l'état liquide passe au travers d'une colonne d'adsorbant en l'occurrence du charbon actif. Il est clair qu'un tel procédé est très lourd à mettre en oeuvre et de surcroît l'extraction qu'il permet n'est pas très sélective.

Un autre procédé physico-chimique d'extraction du cholestérol des graisses est divulgué par la demande de brevet japonais JP N° 59-140299. Il consiste à mettre en contact une matière sèche chargée en cholestérol telle que de la poudre de lait, avec du $CO_2$ supercritique à une température comprise entre 35 et 45°C et à une pression comprise entre $130 \cdot 10^5$ et $200 \cdot 10^5$Pa (130 et 200 atm). L'obtention de ces conditions physiques nécessite l'emploi d'un matériel complexe et onéreux. La conduite du procédé en est ainsi très délicate. De plus, comme il est précisé dans la demande de brevet, d'autres composés lipidiques sont entraînés par le $CO_2$ supercritique. Ce procédé n'est donc pas sélectif.

Pour éliminer les stérols des graisses, il a été également imaginé un procédé de biodégradation desdits stérols divulgué par la demande de brevet EP N° 0278794 et mettant en oeuvre des bactéries, qui mises au contact de la matière grasse, sont aptes à métaboliser au moins l'un des stérols qu'elle contient. Comme tous les procédés faisant intervenir des fermentations, ce procédé de biodégradation est très délicat à conduire du fait de la variabilité inhérente à la matière vivante. De plus, les matériels employés, la durée relativement longue sont, entre autres, des éléments qui rendent un tel procédé onéreux. Enfin, les catabolites produits lors de ces fermentations restent à ce jour totalement inconnus sur le plan de leur nature et de leur toxicité, et sont, de toute façon, présents dans la matière grasse ainsi traitée.

On connaît aussi par la demande de brevet européen EP N° 0256911, un procédé d'élimination du cholestérol contenu dans une matière grasse d'origine animale. Il est basé sur la propriété déjà mise à jour qu'ont les cyclodextrines (polyglucoses cycliques de conformation tubulaire tronconique à 6, 7 ou 8 motifs glucose et désignées respectivement par alpha, bêta ou gamma cyclodextrine) de recevoir dans leur cavité centrale hydrophobe des molécules de stérols et notamment de cholestérol, pour former des complexes d'inclusion solubles dans l'eau. Selon ce procédé, la matière grasse maintenue fluide est mise en contact avec une cyclodextrine sous agitation pendant 30 minutes à 10 heures de façon à permettre la formation de complexes. La séparation de ces derniers est ensuite réalisée par introduction d'eau dans le milieu réactionnel, laquelle solubilise ces complexes. La solution aqueuse ainsi obtenue est ensuite recueillie après décantation.

Le rendement d'extraction du cholestérol par ce procédé est peu important. Dans le meilleur des cas, il

2

n'est en effet que de 41%, et ce après trois extractions successives comme il est indiqué dans l'exemple 3 de la description de cette demande de brevet européen.

Hormis ces performances peu satisfaisantes, ce procédé constitue une succession d'étapes supplémentaires dans la fabrication d'un produit alimentaire. En effet, la démarche si elle était adoptée, par exemple dans le cas du beurre, nécessiterait tout d'abord de fabriquer le produit à base de matière grasse, sous une forme anhydre, de lui faire subir le traitement d'extraction du cholestérol, puis de l'amener sous sa forme de produit alimentaire fini, c'est-à-dire de beurre reconstitué. Ce procédé serait donc nécessairement coûteux en temps, en matériel et en énergie. En outre, il est à noter que selon ce procédé la matière grasse doit être maintenue en fusion sous une atmosphère exempte d'oxygène. Ces caractéristiques techniques impliquent le recours à un appareillage spécifique de maintien en température et d'alimentation en gaz neutre. Enfin, la durée nécessaire uniquement pour la première phase de complexation est au minimum de 30 minutes et en réalité de 2 à 3 heures comme indiqué dans les exemples.

Il ressort de ce qui précède qu'aucune des solutions de l'art antérieur n'a permis jusqu'à maintenant de produire des matières grasses alimentaires appauvries en stérols --notamment en cholestérol-- de manière satisfaisante, c'est-à-dire répondant aux conditions industrielles de rentabilité économique, de souplesse d'utilisation, et de qualité du produit final.

La présente invention vise à remédier aux inconvénients précités de l'art antérieur.

Pour y parvenir, la Société Demanderesse s'est tout d'abord attachée à reformuler le problème technique posé qui consistait à éliminer les stérols des matières grasses.

C'est ainsi qu'il lui a semblé plus opportun de se focaliser sur les méthodes de fabrication de produits alimentaires laitiers dérivés de la crème de lait, par exemple de beurre, contenant des matières grasses, en les améliorant de telle sorte qu'elles permettent l'obtention de produits à teneur réduite en stérols. Il faut observer que cette première démarche ne s'imposait pas à l'évidence puisque, malgré l'existence déjà ancienne des préoccupations à l'égard du cholestérol, elle n'avait encore jamais été envisagée.

Dans un deuxième temps, la Demanderesse a mené toute une série d'études et de recherches, notamment au sein de la Division des Corps Gras de l'IRHO-CIRAD, sur les procédés de fabrication de produits dérivés de crème de lait qui l'ont conduit à mettre en évidence le fait que, de façon tout à fait surprenante et inattendue, de la cyclodextrine mise en contact de crème de lait se présentant sous la forme d'une émulsion huile dans eau, complexe le cholestérol présent, qu'il suffit alors d'inverser l'émulsion huile dans eau de départ en émulsion eau dans huile et que les complexes d'inclusion cyclodextrine/stérols n'ayant pas d'affinité pour la phase grasse, il est alors aisé de les éliminer par tout moyen approprié et connu en soi.

Contrairement à ce qui semblait prévisible, la crème de lait n'entrave pas le phénomène de complexation.

La présente invention se rapporte ainsi à un procédé de fabrication de produits laitiers appauvris en stérols dans lequel le produit de départ utilisé est composé au moins en partie de crème de lait et se présente sous forme d'une émulsion huile dans eau, et consistant essentiellement:

– à mettre en contact avec le produit de départ une quantité de cyclodextrine suffisante pour former des complexes d'inclusion avec les stérols présents dans la matière grasse, de manière à les rendre extractibles de celle-ci;

– à inverser l'émulsion huile dans eau de départ en émulsion eau dans huile;

– à extraire en tout ou partie les complexes formés.

Ces deux dernières étapes peuvent se dérouler successivement ou simultanément.

Un tel procédé permet une excellente intégration des opérations de fabrication. Il ne perturbe en aucune façon l'élaboration des produits laitiers dérivés de la crème de lait. De plus, il n'alourdit que très peu le coût de revient du produit puisque, d'une part, il ne nécessite pas d'équipements lourds supplémentaires ni de surconsommation d'énergie et d'autre part, il n'allonge pratiquement pas la durée du procédé de fabrication classique. Enfin, il permet de réduire considérablement le taux de stérols.

Dans le cadre de l'invention, le terme "cyclodextrine" doit être compris comme englobant les oligo-saccharides cycliques constitués de 6, 7 ou 8 unités glucopyranose dont l'une au moins peut être mono- ou polysubstituée, les polymères dont les monomères sont constitués par ces oligo-saccharides cycliques, ainsi que ces produits greffés ou fixés sur support inerte.

Sans que cela ne soit limitatif, la présente invention concerne, notamment, la fabrication de beurre à teneur réduite en cholestérol.

A ce stade, il est bon de procéder à quelques rappels sur la fabrication traditionnelle de beurre.

Dans cette fabrication, la matière première employée est la crème. Cette dernière est en fait du lait enrichi en matière grasse, obtenu par écrémage spontané ou centrifuge. Elle est constituée d'une émulsion huile dans eau ou suspension colloïdale de particules (globules de matière grasse et micelles protéiques) dans une phase aqueuse dispersante pouvant représenter 30 à 90% du poids total, généralement autour de 55 à 65%.

Classiquement, cette crème est ensuite soumise à une pasteurisation se déroulant à une température de l'ordre de 90°C pendant 30 à 90 secondes et dont les buts sont les suivants:
- la destruction des germes pathogènes;
- la destruction de la plus grande partie de la microflore originelle;
- la destruction des lipases, qui sont des facteurs de rancissement;
- et la formation de produits sulfurés réducteurs, qui s'opposent à l'oxydation de la graisse.

L'étape qui suit est celle de maturation de la crème. Elle consiste en une fermentation destinée d'une part à abaisser le pH par la transformation du lactose en acide lactique, et d'autre part à élaborer des arômes, du diacétyle en particulier. Cette opération permet l'optimisation de la fabrication et de la conservation du beurre et améliore ses qualités organoleptiques.

Il faut noter que cette maturation "biologique" peut être supprimée ou remplacée par une maturation "physique" (procédé Nizo). Dans ce cas, la crème n'aura pas subi d'abaissement de pH; elle sera qualifiée de "douce".

Cette crème maturée ou non sert de base à l'opération essentielle de la fabrication du beurre, à savoir la butyrification. Cette dernière repose sur une modification de la suspension des globules gras avec inversion des phases de l'émulsion. Selon les procédés, une proportion plus ou moins importante des globules gras est détruite par agitation mécanique.

L'émulsion huile dans eau fluide initiale que constitue la crème de lait, donne naissance à un milieu biphasique constitué d'une part de beurre qui est une émulsion d'eau dans huile titrant environ 80% de matière grasse, et d'autre part de babeurre ou phase aqueuse contenant le lactose, des protéines, des sels minéraux et des lipides.

Dans le barattage discontinu classique et dans les procédés les plus répandus du barattage continu, c'est l'agitation qui réalise cette transformation. Ces procédés traitent des crèmes de concentration moyenne de 30 à 40% de matière grasse à une température de l'ordre de 6-7°C pour les crèmes "douces" et comprise entre 9 et 13°C pour les crèmes "acides". Cette température est dépendante de la composition de la matière grsse qui varie en fonction des saisons.

L'inversion de l'émulsion résulte en réalité de la conjugaison de l'agitation mécanique et des paramètres suivants: acidité de la crème, teneur en matière grasse, température.

La déstabilisation de l'émulsion est la conséquence de la destruction de la membrane des globules gras située à l'interface phase aqueuse - phase grasse : la matière grasse va assurer une liaison continue entre globules initialement voisins. Cette métamorphose se matérialise par l'apparition de grains de beurre, dont le diamètre moyen peut varier de quelques dixièmes de millimètre à quelques millimètres en fin de barattage. La phase grasse devient ainsi une phase continue emprisonnant des gouttelettes de phase aqueuse, leurs proportions pondérales étant respectivement de 82% minimum et de 16% maximum (proportions conformes à la législation française). La matière sèche non grasse représente environ 2% du poids du beurre. La taille des diverses particules (gouttelettes d'eau, globules gras, bulles d'air) présentes dans le beurre varie avec la température, la vitesse et la durée du barattage.

Pour terminer, la séparation de la phase aqueuse excédentaire ou babeurre est réalisée par malaxage du beurre. De cette manière, l'essentiel de la phase aqueuse, constituant à l'origine la phase continue de la crème, est expulsé de l'espace intergranulaire du beurre. Le malaxage est de préférence associé à un lavage à l'eau.

Il est à noter que, suivant la méthode alternative de fabrication du beurre appelée méthode du Nizo (Hollande) et indiquée ci-avant, la maturation fermentaire de la crème est remplacée par une maturation "physique" (5 h à 6°C). L'ensemencement par des souches aromatisantes et acidifiantes ne se fait alors qu'au cours du malaxage.

Dans les conditions du procédé conforme à la présente invention et appliqué à la fabrication de beurre, il s'avère que la cyclodextrine a une affinité remarquable pour la fraction stérolique représentée à 98% par du cholestérol. Le rendement de complexation est excellent. Le cholestérol sous forme complexé a perdu son affinité vis-à-vis des globules gras de la phase lipidique. Il devient ainsi dispersible dans l'eau et pourra par conséquent être séparé aisément du beurre. Ce beurre ainsi obtenu présente un taux de cholestérol extrêmement réduit.

Avantageusement, la teneur en matière grasse de la crème utilisée est comprise entre 10 et 70% en poids et de préférence 35 à 45% en poids.

La cyclodextrine employée est du type alpha, bêta ou gamma, de préférence bêta, substituée ou non. Les groupements mono- ou polysubstituants de la cyclodextrine peuvent être notamment des alkyls tels que l'hydroxypropyl ou des saccharides du type glycosyl, maltosyl ou autres. Sa concentration varie de 0,01 à 25% en poids par rapport à la matière grasse, de préférence de 0,5 à 18% et plus préférentiellement encore de 1 à 10%, par exemple de l'ordre de 8% en poids.

Dans le procédé de l'invention, la crème subit éventuellement un traitement thermique du type pasteurisation, ou stérilisation UHT, éventuellement une maturation soit biologique à visée acidifiante et aromatisante soit "physique", puis nécessairement une inversion d'émulsion telle que le barattage à température sensiblement constante et contrôlée, suivie d'un malaxage de préférence associé à un lavage à l'eau.

Dans le cas d'une maturation physique de la crème, l'acidification et l'aromatisation sont effectuées au cours du malaxage.

La cyclodextrine peut être ajoutée à la crème à tout moment avant l'inversion d'émulsion, mais de préférence immédiatement avant celle-ci.

Suivant un mode préféré de mise en oeuvre du procédé conforme à l'invention, on introduit dans une crème industrielle traitée thermiquement ou non et à teneur en matière grasse comprise entre 35 et 45% en poids, de la bêta-cyclodextrine sous forme pulvérulente à une concentration comprise entre 1 et 10% en poids, de préférence de l'ordre de 8% en poids par rapport à la matière grasse. La bêta-cyclodextrine employée est par exemple du type de celle commercialisée par la Société ROQUETTE FRERES sous la marque KLEPTOSE[R] se présentant sous la forme d'une poudre blanche et fine et contenant environ 13 à 14% d'eau. La crème est ensuite agitée modérément pendant au moins quelques secondes, et de préférence au moins 120 secondes, à une température de préférence comprise entre 5 et 20°C et correspondant à la température normale de barattage.

Par la suite, la crème est agitée mécaniquement à ladite température, pendant une durée suffisante pour permettre la formation de grains de beurre. Ces derniers sont ensuite séparés du babeurre puis subissent une opération de malaxage de préférence asociée à un lavage à l'eau.

Suivant une variante de l'invention, préalablement à l'introduction de cyclodextrine, on ajoute à la crème environ 2% de lait ensemencé avec des levains lactiques, de manière à produire une fermentation d'une durée de l'ordre de 16 heures, à une température d'environ 30°C.

Suivant une autre variante de l'invention, préalablement à l'introduction de cyclodextrine, la crème est soumise à une maturation physique consistant en un stockage à une température comprise entre 4 et 8°C, de préférence sensiblement égale à 6°C pendant environ 6 heures. Par ailleurs, au cours du malaxage, la masse de beurre est ensemencée par un mélange de ferments lactiques et d'un concentré de culture acide.

Cette variante montre que le pH ne semble avoir que peu d'incidence sur la complexation des cyclodextrines avec les stérols et notamment avec le cholestérol.

Le procédé selon l'invention permet une réduction du taux de cholestérol dans le beurre. En outre, l'addition de bêta-cyclodextrine n'a aucune incidence néfaste sur la fabrication du beurre tant sur le plan qualitatif, que sur le plan quantitatif.

Le procédé selon la présente invention peut également être appliqué à la fabrication de matière grasse laitière anhydre (M.G.L.A.). Ladite fabrication peut être effectuée de manière directe à partir de crème ou de manière indirecte, à partir d'un beurre obtenu par mise en oeuvre du procédé de fabrication conforme à l'invention et décrit ci-avant.

De toute façon, l'invention sera mieux comprise à l'aide des exemples suivants.

<u>EXEMPLE I</u>

**Fabrication de beurre par mise en oeuvre d'un procédé traditionnel par barattage et sans maturation préalable.**

Dans cet exemple, le produit départ est la crème industrielle pasteurisée contenant 40% en poids de matière grasse comprenant elle-même 0,13% en poids de cholestérol, soit 394 mg de cholestérol pour 300 g de crème.

Le barattage est effectué en laboratoire au moyen d'un dispositif comprenant:

Un batteur (Philips, modèle HR 1480) muni de fouets est placé au-dessus d'un bécher en polypropylène contenant la crème. Ce dernier est plongé dans un bain d'eau maintenu à température constante de barattage, à savoir 10°C en été et 13°C en hiver.

Le batteur électrique est relié au secteur par l'intermédiaire d'un auto-transformateur, afin de pouvoir faire varier la vitesse de rotation. Un éclairage convenablement placé au-dessus du montage facilite l'observation de la manipulation, en particulier lors de la déstabilisation de l'émulsion. Un chronomètre vient compléter cet équipement.

Pour le barattage le système d'agitation (batteur à fouets) est réglé à 90-100 tours par minute. L'observation visuelle permet de situer l'état d'avancement du processus d'inversion de l'émulsion. Après quinze minutes environ, il y a formation de mousse avec augmentation du volume (foisonnement).

L'expulsion de la matière grasse se fait ensuite par cisaillement entre les fouets et contre les parois du bécher. Un éclairage adapté permet à un observateur entraîné de déceler l'apparition de petits grains (diamètre inférieur à 1 mm) qui accompagne la "tombée de la mousse", au bout de trente minutes environ. C'est le moment où le babeurre se sépare des grains de beurre. La couleur du solide change et devient subitement jaune. Le barattage est terminé environ quarante minutes après le début de la manipulation et les grains de beurre ont alors la taille de grains de riz.

Le lavage et la séparation de la phase aqueuse (babeurre + eau de lavage) s'effectuent dans un filtre, au-dessus d'un bécher récepteur. Ce filtre a été monté au laboratoire au moyen d'un cylindre en acier (hauteur 13 cm, diamètre 8 cm) et d'une grille de tamis métallique calibré 80 mesh, solidement liés.

Le mélange hétérogène obtenu après barattage, est transvasé dans le filtre et le babeurre s'écoule par gravité dans le bécher récepteur. Le lavage se fait au moyen d'une pissette avec un volume d'eau déminéralisée refroidie à 10°C ou 13°C, égal à trois fois le volume de la crème. Lors de l'agitation à la spatule, les grains de beurre augmentent de volume et s'agglomèrent sous forme de mottes.

Le beurre est alors transvasé dans un bécher taré où il subit l'opération de malaxage par trituration avec une spatule, destinée à rendre le beurre plus compact et à faciliter ainsi l'élimination de la phase aqueuse excédentaire; celle-ci est jointe au filtrat obtenu. A l'issue de cette dernière étape, le bécher est pesé pour déterminer la quantité de beurre et établir un bilan de fabrication.

Dans cet exemple, le rendement pondéral de fabrication correspondant au rapport =

$$\frac{\text{poids de beurre obtenu}}{\text{poids de beurre théorique}} \times 100 \text{ est de l'ordre de 88\%.}$$

Le poids de beurre théorique est calculé en supposant que le taux d'incorporation de la matière grasse de la crème dans le beurre est de 100% sachant que la composition légale du beurre est la suivante:

| | |
|---|---|
| matière grasse | 82% |
| eau | 16% |
| extrait sec dégraissé | 2%. |

Le lot de beurre obtenu possède un taux de cholestérol total de l'ordre de 0,17% en poids.

La méthode de dosage du cholestérol total employée est la chromatographie en couche mince sur gel de silice 60, avec dépôt direct d'échantillon de beurre solubilisé et préalablement traité par méthanolyse en milieu acide. La révélation est réalisée à l'aide d'un réactif à la vanilline en présence d'acide orthophosphorique. Un dosage colorimétrique sur photodensitomètre est ensuite effectué.

## EXEMPLE II

**Fabrication de beurre par mise en oeuvre du procédé conforme à l'invention par barattage et sans maturation de la crème.**

Le produit de départ utilisé est, comme dans l'exemple I, de la crème industrielle pasteurisée à 40% de matière grasse, non maturée, et contenant du cholestérol à un taux de 0,13% en poids.

Conformément à l'invention, on introduit directement dans cette crème 10 g, soit 8,3% en poids par rapport à la matière grasse, de bêta-cyclodextrine pulvérulente à teneur en eau comprise entre 13 et 14% et commercialisée par la Société Demanderesse sous la dénomination de KLEPTOSE[R]. Le milieu ainsi obtenu est alors homogénéisé dans des conditions d'agitation modérée, pendant une demi-heure, à une température égale à la température de barattage, soit 10°C en été et 13°C en hiver.

La méthodologie mise en oeuvre ensuite est strictement identique à celle décrite ci-avant pour l'exemple I.

Le rendement pondéral de fabrication du beurre constaté est de l'ordre de 90%.

L'addition de bêta-cyclodextrine n'a pas modifié la fabrication du beurre sur le plan quantitatif, ni sur le plan sensoriel.

Le lot de beurre fabriqué possède quant à lui un taux de cholestérol total de 0,045% en poids, ce qui représente une réduction de 73,5% par rapport au taux de cholestérol du beurre obtenu par le procédé traditionnel décrit dans l'exemple I.

## EXEMPLE III

**Fabrication de beurre par mise en oeuvre d'un procédé traditionnel par barattage avec maturation de la crème.**

Dans cet exemple, il est tout d'abord procédé à la maturation de 300 g de crème industrielle pasteurisée dont la teneur en matière grasse est de 40% en poids. Son taux de cholestérol est d'environ de 0,13% en poids (392 mg de cholestérol pour 300 g).

La maturation est réalisée par ensemencement à l'aide de lait riche en levains lactiques à la dose de 2% par rapport à la matière grasse de la crème et fermentation sans agitation durant 16 heures à 30°C.

Les levains lactiques ont été obtenus au préalable par ensemencement en ferments lactiques lyophilisés (0,70 g, Laboratoires G. Roger - 77260 La Ferté-sous-Jouarre) d'un litre de lait entier stérilisé UHT et par fermentation sans agitation durant 24 heures à 30°C.

La crème maturée jusqu'à un pH de l'ordre de 5 est ensuite soumise aux étapes traditionnelles décrites ci-avant de barattage, malaxage et lavage.

Le rendement pondéral de fabrication du beurre obtenu est de l'ordre de 90%. Il est semblable à celui constaté pour le procédé utilisant la crème non maturée comme produit de départ.

Le taux de cholestérol de ce beurre est d'environ 0,17% en poids.

## EXEMPLE IV

**Fabrication de beurre par mise en oeuvre du procédé conforme à l'invention par barattage et avec maturation de la crème.**

La maturation jusqu'à un pH de 5, l'addition de bêta-cyclodextrine et les opérations finales de fabrication sont réalisées dans les mêmes conditions que celles décrites dans les exemples précédents.

On utilise au départ 300 g de crème pasteurisée industrielle, identique à celle employée dans l'exemple III.

Le rendement pondéral de fabrication du beurre est de l'ordre de 86%, ce qui correspond sensiblement à celui mentionné dans l'exemple III décrivant le procédé traditionnel sans ajout de bêta-cyclodextrine.

Le taux de cholestérol libre du beurre obtenu est d'environ 0,051% en poids. La réduction de 70% du taux de cholestérol présent dans le beurre par rapport à celui mesuré dans le beurre obtenu par mise en oeuvre du procédé de l'exemple III, est du même ordre que celle constatée dans les exemples comparatifs I et II.

Ces exemples mettent en évidence les performances avantageuses du procédé conforme à l'invention dans deux de ces modes de mise en oeuvre.

Il apparaît ainsi que ce procédé permet l'obtention de façon reproductible, de beurre qui, d'une part est de quantité et de qualité comparables à celles de beurre obtenu par les procédés classiques, et qui d'autre part, présente une teneur extrêmement réduite en cholestérol.

Il va de soi que le procédé selon l'invention peut être appliqué à toutes les techniques connues de fabrication de beurre qu'elles soient du type par barattage discontinu ou continu (procédé Fritz), ou bien encore du type à double centrifugation comme selon les procédés ALFA ou GOLDEN FLOW.

## EXEMPLE V

**Influence de la teneur en bêta-cyclodextrine dans la crème sur le rendement d'extraction du cholestérol du beurre fabriqué dans les mêmes conditions que celles de l'exemple IV.**

Le tableau I annexé (planche 1/1) regroupe les différents résultats obtenus pour des concentrations croissantes en bêta-cyclodextrine pulvérulente, commercialisée sous la marque déposée KLEPTOSE[R] par la Société ROQUETTE FRERES et contenant 13 à 14% d'eau. Le rendement d'extraction du cholestérol est calculé de la manière suivante:

$$R = 100 - \frac{\text{Taux de cholestérol en \% en poids dans le beurre}_* \text{ pour une concentration de X \% de ß-cyclodextrine}^*}{\text{Taux de cholestérol en \% en poids dans le beurre sans ajout de ß-cyclodextrine}} \times 100$$

\* X est donné en pourcentage en poids par rapport à la matière grasse de la crème.

Ce tableau prouve que la diminution du cholestérol du beurre est directement dépendante de la quantité de bêta-cyclodextrine KLEPTOSE[R] ajoutée à la crème.

## EXEMPLE VI

**Fabrication de matière grasse laitière anhydre (M.G.L.A.) à teneur réduite en cholestérol selon une technique indirecte à partir de beurre obtenu par mise en oeuvre du procédé conforme à l'invention (Exemples II, IV et V).**

Dans cette technique indirecte, le beurre de l'exemple II à teneur réduite en cholestérol est tout d'abord mis en fusion par chauffage à une température inférieure à 80°C, de l'ordre de 65°C. Il subit ensuite une opération telle que la double centrifugation complétée par un lavage à l'eau de manière à séparer la phase non grasse de la phase grasse ou huile de beurre. Cette dernière est soumise à une dessication sous vide de façon à éliminer l'eau résiduelle jusqu'à l'amener à une concentration inférieure à 0,2% en poids. La M.G.L.A. ainsi obtenue est très appauvrie en cholestérol.

## EXEMPLE VII

**Fabrication de matière grasse laitière anhydre (M.G.L.A.) a teneur réduite en cholestérol selon une technique directe.**

Dans la technique directe, la crème de lait est employée comme produit de départ. Après mélange de celle-ci avec la cyclodextrine, l'inversion de l'émulsion est réalisée mécaniquement à l'aide d'appareils connus en soi du type homogénéisateur, "clarificateur" ou autres. L'huile de beurre obtenue après séparation d'une grande partie de la phase aqueuse, est portée à une température de l'ordre de 60°C pour un lavage à l'eau chaude puis est finalement séchée sous vide pour atteindre une teneur en eau de 0,20% en poids. Le taux de cholestérol de la matière grasse laitière anhydre ainsi fabriquée est très fortement réduit.

Le beurre et la matière grasse laitière anhydre, appauvris en cholestérol et obtenus par les techniques décrites dans les exemples précédents peuvent être naturellement consommés tels quels ou bien employés comme ingrédients alimentaires dans différents produits tels que les pâtisseries, les crèmes glacées, les crèmes desserts, les laits ou les fromages reconstitués, les pâtes à tartiner, les crèmes du type "Coffee Whiteners", ou autres.

## TABLEAU I

| Concentration en ß-cyclodextrine KLEPTOSE | | Quantité de beurre (g) | | Rendement de fabrication (% en poids) | Quantité de cholestérol dans le beurre (mg) | Taux de cholestérol (% en poids/ beurre) | Rendement extraction cholestérol (%) |
|---|---|---|---|---|---|---|---|
| (g) | % en poids / à la matière grasse de la crème | obtenu | théorique | | | | |
| 0 | 0 | 128 | 146 | 88 | 229 | 0,18 | 0 |
| 2,5 | 2,08 | 127 | 146 | 87 | 172 | 0,135 | 25 |
| 5 | 4,16 | 133 | 146 | 91 | 133 | 0,10 | 44 |
| 10 | 8,33 | 126 | 146 | 86 | 67 | 0,053 | 71 |

EP 0 406 101 B1

EP 0 406 101 B1

## Revendications

1. Procédé de fabrication de produits laitiers à teneur réduite en stérols et notamment en cholestérol, caractérisé en ce que le produit de départ utilisé est composé au moins en partie de crème de lait et se présente sous forme d'une émulsion huile dans eau, et en ce qu'il consiste essentiellement à:
   – mettre en contact avec le produit de départ une quantité de cyclodextrine suffisante pour former des complexes d'inclusion avec les stérols présents dans la matière grasse, de manière à les rendre extractibles;
   – inverser l'émulsion huile dans eau de départ en émulsion eau dans huile;
   – extraire en tout ou partie les complexes formés.

2. Procédé selon la revendication 1 caractérisé en ce que la teneur en matière grasse de la crème de lait utilisée est comprise entre 10 et 70% en poids et de préférence entre 35 et 45% en poids.

3. Procédé selon la revendication 1 ou la revendication 2, caractérisé en ce qu'il est appliqué à la fabrication du beurre.

4. Procédé selon l'une quelconque des revendications 1 à 3, caractérisé en ce qu'il est appliqué à la fabrication de matière grasse laitière anhydre (M.G.L.A.).

5. Procédé selon la revendication 4 dans lequel la crème de lait est utilisée comme produit de départ, caractérisé en ce que l'inversion d'émulsion qu'il comprend est réalisée à l'aide d'appareils permettant d'obtenir, après séparation d'une grande partie de la phase aqueuse, de l'huile de beurre, et en ce que cette dernière est finalement soumise à un séchage éventuellement précédé d'un lavage à l'eau.

6. Procédé selon l'une quelconque des revendications 1 à 5, caractérisé en ce que la cyclodextrine employée est du type alpha, bêta ou gamma, substituée ou non.

7. Procédé selon la revendication 6, caractérisé en ce que la cyclodextrine est sous forme polymérisée.

8. Procédé selon la revendication 6 ou la revendication 7, caractérisé en ce que la cyclodextrine considérée est du type bêta.

9. Procédé selon la revendication 8 caractérisé en ce que la dose d'utilisation de cette cyclodextrine est de 0,01 à 25% en poids par rapport à la matière grasse de la crème.

10. Procédé selon l'une quelconque des revendications 2, 3 et 6 à 9, caractérisé en ce qu'il comprend successivement:
   – éventuellement une étape de traitement thermique de la crème du type pasteurisation ou stérilisation UHT,
   – éventuellement une étape de maturation,
   – une étape d'inversion d'émulsion conduisant à la formation de beurre et de babeurre,
   – une étape de malaxage de la masse de beurre, de préférence associée à un lavage à l'eau, de manière à séparer le beurre du babeurre,
   et en ce que la cyclodextrine est ajoutée à la crème à un moment quelconque avant l'inversion d'émulsion.

11. Procédé selon la revendication 10 caractérisé en ce que l'inversion d'émulsion est engendrée par un barattage, c'est-à-dire une agitation mécanique, effectuée à température contrôlée.

12. Procédé selon la revendication 10 et la revendication 11 caractérisé en ce qu'il consiste à ajouter la cyclodextrine à la crème à raison d'une concentration comprise de préférence entre 0,5 et 18% en poids, et plus préférentiellement encore entre 1 à 10% en poids par rapport à la matière grasse, à agiter modérément ladite crème pendant au moins quelques secondes et de préférence au moins 120 secondes, à une température correspondant sensiblement à la température de barattage.

13. Procédé selon l'une quelconque des revendications 10 à 12 caractérisé en ce qu'il comporte une étape de maturation de la crème consistant à ensemencer celle-ci avec des levains lactiques acidifiants et aromatisants de manière à l'amener à une valeur de pH optimale et à la charger en arômes alimentaires appropriés.

14. Procédé selon l'une quelconque des revendications 10 à 12, caractérisé en ce qu'il comprend une étape de maturation de la crème dite "physique" consistant en un stockage à une température comprise entre 4 et 8°C pendant plusieurs heures et en ce qu'au cours du malaxage la masse de beurre est ensemencée par un mélange de ferments lactiques aromatisants et d'un concentré de culture acide.

15. Procédé selon la revendication 4 caractérisé en ce qu'il consiste essentiellement à mettre en fusion le beurre obtenu selon l'une quelconque des revendications 1 à 3 et 6 à 14, à séparer la phase grasse de la phase aqueuse par un moyen du type double centrifugation, puis à évaporer de préférence sous vide l'eau résiduelle de la phase grasse de manière à amener la teneur en eau à une valeur inférieure à 0,2% en poids.

EP 0 406 101 B1

**Patentansprüche**

1. Verfahren zur Herstellung von Milchprodukten mit einem reduzierten Gehalt an Sterinen, insbesondere Cholesterin, dadurch gekennzeichnet, daß das verwendete Ausgangsprodukt wenigstens zum Teil aus Rahm besteht und in der Form einer Emulsion von Öl in Wasser vorliegt, und daß das Verfahren im wesentlichen aus den folgenden Schritten besteht:
    – Inberührungbringen des Ausgangsproduktes mit einer Menge von Cyclodextrin, welche zur Bildung von Einschlußkomplexen mit den im Fett vorhandenen Sterinen ausreicht, um diese Sterine extrahierbar zu machen;
    – Umkehren der Öl-in-Wasser- Ausgangsemulsion in eine Wasser-in-Öl-Emulsion;
    – Vollständiges oder teilweises Extrahieren der gebildeten Komplexe.

2. Verfahren nach Anspruch 1, dadurch gekennzeichnet, daß der Fettgehalt des verwendeten Rahms zwischen 10 und 70 Gew.-%, vorzugsweise zwischen 35 und 45 Gew.-% liegt.

3. Verfahren nach Anspruch 1 oder 2, dadurch gekennzeichnet, daß es auf die Herstellung von Butter angewendet wird.

4. Verfahren nach einem der Ansprüche 1 bis 3, dadurch gekennzeichnet, daß es auf die Erzeugung von wasserfreiem Milchfett ("M.G.L.A") angewendet wird.

5. Verfahren nach Anspruch 4, bei welchem Rahm als Ausgangsprodukt verwendet wird, dadurch gekennzeichnet, daß die Emulsionsumkehr, welche das Verfahren umfaßt, mit Hilfe von Vorrichtungen vorgenommen wird, welche es ermöglichen, daß man nach Abtrennen eines Hauptanteiles der wässerigen Phase Butterfett erhält, und daß dieses letztgenannte schließlich einem Trocknen unterworfen wird, dem gegebenenfalls ein Waschen mit Wasser vorangeht.

6. Verfahren nach einem der Ansprüche 1 bis 5, dadurch gekennzeichnet, daß das verwendete Cyclodextrin vom alpha-, beta- oder gamma-Typus ist, und daß es substituiert oder nicht substituiert ist.

7. Verfahren nach Anspruch 6, dadurch gekennzeichnet, daß das Cyclodextrin in polymerisierter Form vorliegt.

8. Verfahren nach Anspruch 6 oder 7, dadurch gekennzeichnet, daß das in Betracht gezogene Cyclodextrin ein solches vom β-Typus ist.

9. Verfahren nach Anspruch 8, dadurch gekennzeichnet, daß die von diesem eingesetzte Menge 0,01 bis 25 Gew.-%, bezogen auf den Fettgehalt des Rahms, beträgt.

10. Verfahren nach einem der Ansprüche 2, 3 und 6 bis 9, dadurch gekennzeichnet, daß es die folgenden, aufeinanderfolgenden Stufen umfaßt:
    – gegebenenfalls eine Stufe der Wärmebehandlung des Rahms von Typus eines Pasteurisierens oder UHT-Sterilisierens;
    – gegebenenfalls eines Stufe des Reifens;
    – eine Stufe des Umkehrens der Emulsion, welche zur Bildung von Butter und von Buttermilch führt;
    – eine Stufe des Knetens der Buttermasse, welche vorzugsweise mit einem Waschen mit Wasser verbunden ist, um die Butter von der Buttermilch abzutrennen;
    und daß das Cyclodextrin zu dem Rahm zu irgendeinem Zeitpunkt vor dem Umkehren der Emulsion zugesetzt wird.

11. Verfahren nach Anspruch 10, dadurch gekennzeichnet, daß die Umkehr der Emulsion durch "Buttern" bzw. andauerndes Schlagen, das heißt mechanisches Rühren, bewirkt wird, welches bei geregelter Temperatur durchgeführt wird.

12. Verfahren nach Anspruch 10 und 11, dadurch gekennzeichnet, daß es darin besteht, daß man das Cyclodextrin zu dem Rahm in einer Konzentration zusetzt, welche vorzugsweise zwischen 0,5 und 18 Gew.-% und in noch höher bevorzugtem Maße zwischen 1 und 10 Gew.-%, bezogen auf das Fett, liegt, und daß man diesen Rahm während wenigstens einiger Sekunden, und vorzugsweise während wenigstens 120 Sekunden, bei einer Temperatur mäßig umrührt, welche im wesentlichen der Temperatur des Butterns entspricht.

13. Verfahren nach einer der Ansprüche 10 bis 12, dadurch gekennzeichnet, daß es eine Stufe des Reifens des Rahms umfaßt, welche darin besteht, daß man diesen Rahm mit ansäuernden und aromatisierenden Milchfermenten derart beimpft, daß dieser Rahm auf einen optimalen pH-Wert gebracht und mit den entsprechenden Nahrungsmittel-Aromastoffen beladen wird.

14. Verfahren nach einem der Ansprüche 10 bis 12, dadurch gekennzeichnet, daß es eine Stufe der sogenannten "physikalischen" Reifung des Rahms umfaßt, welche in einem mehrstündigen Lagern bei einer zwischen 4 und 8° C liegenden Temperatur besteht, und daß die Buttermasse im Verlaufe des Knetens mit einem Gemisch von aromatisierenden Milchfermenten und mit einem sauren Kulturkonzentrat beimpft wird.

15. Verfahren nach Anspruch 4, dadurch gekennzeichnet, daß es im wesentlichen darin besteht, die nach einem der Ansprüche 1 bis 3, und 6 bis 14 erhaltene Butter zum Schmelzen zu bringen, die fette Phase von

11

der wässerigen Phase durch ein Mittel vom Typus einer doppelten Zentrifugation abzutrennen, und dann - vorzugsweise unter Vakuum - das Restwasser aus der fetten Phase derart abzudampfen, daß man den Wassergehalt auf einen unter 0,2 Gew.-% liegenden Wert bringt.

**Claims**

1. Process of manufacturing dairy products with reduced content of sterols and particularly of cholesterol, characterized in that the starting product used is composed at least in part of dairy cream and is in the form of an oil-in-water emulsion, and in that it consists essentially of:
   – contacting the starting product with a sufficient amount of cyclodextrin to form inclusion complexes with the sterols present in the fat, so as to render them extractable;
   – inverting the oil-in-water starting emulsion into a water-in-oil emulsion;
   – extracting the complexes formed in whole or in part.

2. Process according to claim 1, characterized in that the content of fat of the dairy cream used is comprised of between 10 and 70% by weight and preferably between 35 and 45% by weight.

3. Process according to claim 1 or claim 2, characterized in that it is applied to the manufacture of butter.

4. Process according to any one of claims 1 to 3, characterized in that it is applied to the manufacture of anhydrous dairy fat (A.D.F.).

5. Process according to claim 4 in which the dairy cream is used as a starting product, characterized in that the emulsion inversion that it comprises is performed by means of equipment enabling the obtaining, after the separation of a large part of the aqueous phase, of butter oil, and in that the latter is finally subjected to drying possibly preceded by washing with water.

6. Process according to any one of claims 1 to 5, characterized in that the cyclodextrin employed is of the alpha, beta or gamma type, substituted or not.

7. Process according to claim 6, characterized in that the cyclodextrin is in polymerized form.

8. Process according to claim 6 or claim 7, characterized in that the cyclodextrin concerned is of the beta type.

9. Process according to claim 8, characterized in that the dose used of the cyclodextrin is from 0.01 to 25% by weight with respect to the fat of the cream.

10. Process according to any one of claims 2, 3 and 6 to 9, characterized in that it comprises succcessively:
    – if necessary a step of heat treatment of the cream of the pasteurisation or UHT sterilisation type,
    – if necessary a maturation step,
    – an emulsion inversion step resulting in the formation of butter or buttermilk,
    – a step of malaxating the mass of butter, preferably associated with washing with water, so as to separate the butter from the buttermilk,
    and in that the cyclodextrin is added to the cream at any time before the emulsion inversion.

11. Process according to claim 10, characterized in that emulsion inversion is produced by churning, that is to say a mechanical stirring, carried out at a controlled temperature.

12. Process according to claim 10 and claim 11, characterized in that it consists of adding the cyclodextrin to the cream in the proportion of a concentration comprised preferably between 0.5 and 18% by weight, and more preferably still, between 1 and 10% by weight with respect to the fat, of stirring said cream moderately for at least some seconds and preferably at least 120 seconds, at a temperature corresponding substantially to the churning temperature.

13. Process according to any one of claims 10 to 12, characterized in that it comprises a maturation step of cream consisting of seeding the latter with acidifying and flavouring lactic leavens so as to bring it to an optimal pH value and to charge it with suitable food flavourings.

14. Process according to any one of claim 10 to 12, characterized in that it comprises a so-called "physical" maturation step of the cream consisting of storage at a temperature comprised between 4 and 8°C for several hours and in that in the course of the malaxation the butter is seeded by a mixture of lactic flavouring ferments and an acid culture concentrate.

15. Process according to claim 4, characterized in that it consists essentially of melting the butter obtained according to any one of claims 1 to 3 and 6 to 14, of separating the fatty phase from the aqueous phase by means of the double centrifugation type, then of evaporating preferably under vacuum the residual water from the fatty phase so as to bring the water content to a value of below 0.2% by weight.